# EUROPÄISCHE PATENTSCHRIFT

(11) **EP 1 162 893 B1**
(45) Veröffentlichungstag und Bekanntmachung des Hinweises auf die Patenterteilung: **08.06.2005**
(21) Anmeldenummer: 00910861.4
(22) Anmeldetag: 18.03.2000
(51) Int. Cl.: A23L 1/314, A23L 1/317

(54) **UMRÖTUNGSMISCHUNG FÜR FLEISCHERZEUGNISSE**
MIXTURE FOR REDDENING MEAT PRODUCTS
MELANGE DESTINE A ROUGIR DES PRODUITS CARNES

(30) Priorität: 25.03.1999 DE 19913437
(43) Veröffentlichungstag der Anmeldung: 19.12.2001
(73) Patentinhaber: Karl Müller GmbH & Co., 70469 Stuttgart (DE)
(72) Erfinder: GEHRING, Udo, D-71706 Markgröningen (DE); PÖHNL, Helmut, D-74321 Bietigheim-Bissingen (DE)
(74) Vertreter: Thiel, Christian, Dr. Dipl.-Chem.
(86) Internationale Anmeldenummer: PCT/EP2000/002421
(87) Internationale Veröffentlichungsnummer: WO 2000/057728

(56) Entgegenhaltungen:
- EP-A- 0 253 158
- EP-A- 0 641 857
- DE-A- 3 509 392
- DE-A- 4 035 836
- DE-A- 4 104 710
- US-A- 4 304 868
- US-A- 4 886 673
- DATABASE FSTA [Online] INTERNATIONAL FOOD INFORMATION SERVICE (IFIS), FRANFURT/MAIN, DE; HAUSER E ET AL: "Umrötung von Rindfleisch in Suppenkonserven." Database accession no. 84-2-09-s1835 XP002142817 & PROCEEDINGS OF THE EUROPEAN MEETING OF MEAT RESEARCH WORKERS 1983 CH-2500 BIEL, SWITZERLAND,
- PATENT ABSTRACTS OF JAPAN vol. 1997, no. 05, 30. Mai 1997 (1997-05-30) & JP 09 023854 A (KOBAYASHI TOSHIHARU), 28. Januar 1997 (1997-01-28)

## Beschreibung

Die Erfindung betrifft eine Umrötungsmischung für Fleischerzeugnisse, insbesondere Brühwurst, unter Zusatz von pflanzlichen Produkten, insbesondere Gemüseerzeugnissen, und nitratreduzierenden Mikroorganismen.

Die Umrötung von Fleischerzeugnissen geht auf die Verwendung von Nitrat und/oder Nitritpökelsalz zurück, das in Mengen von maximal 150 mg/kg Brätmasse zugesetzt werden darf. Eine Umrötung von Brühwürsten mit Hilfe von aus der Fleischwarenherstellung bekannten Mikroorganismen ist bislang nicht üblich, insbesondere deshalb, weil die nach traditioneller Technologie alsbald nach dem Herstellungsprozeß vorgenommene Erhitzung keine ausreichenden metabolischen Leistungen von Mikroorganismen zuläßt.

Da die verbraucherfunktionellen Lebensmittelzutaten natürlichen Ursprungs zunehmend ein größeres Vertrauen entgegenbringen als den herkömmlichen Zusatzstoffen, wäre es wünschenswert, über ein Umrötungsmittel und -verfahren zu verfügen, das den natürlichen Nitratgehalt von Lebensmitteln ausnutzt. Ein solches Mittel und Verfahren müßte auf kontrollierbare und reproduzierbare Weise mit lebensmittelrechtlich zugelassenen Methoden zu einem innerhalb der gesetzlichen Beschränkungen liegenden Nitritgehalt in dem so behandelten Fleischerzeugnis führen.

DE-A-4104710 offenbart ein Verfahren zur Herstellung Kimchifermentierter Wurst wobei der Kimchi-Niederschlag als Starts-Mikroorganisms direckt verwendet wird.

DE-A-3509392 offenbart ein Verfahren zur Erzielung einer natürlichen Umrötung und Farberhaltung auf Basis natürlicher Gewürze.

Dieses Ziel wird mit einer Umrötungsmischung für Fleischerzeugnisse, insbesondere Brühwurst, erreicht, welche, bezogen auf 1 kg Fleisch- oder Wurstmasse, 1 x 10⁸ bis 5 x 10¹⁰ Zellen eines lebensmitteltauglichen nitratreduzierenden Mikroorganismus und 10 bis 2000 g, bezogen auf das Frischgewicht, eines Gemüseerzeugnisses mit einem natürlichen Nitratgehalt von 100 bis 5000 mg/kg enthält. Die Mikroorganismen und das Gemüseerzeugnis liegen jeweils in getrockneter Form vor. Bei der Verwendung von getrockneten Mikroorganismen muß deren Aktivität durch Rehydratisierung und gegebenenfalls geeignete Nährstoffkombinationen gefördert werden.

Die erfindungsgemäße Umrötungsmischung ist für die Herstellung von Fleischerzeugnissen, insbesondere Brühwurst, bestimmt und daraufhin optimiert. Sie enthält in der vorgenannten Menge Keime eines lebesmitteltauglichen nitratreduzierenden Mikroorganismus sowie ein Gemüseerzeugnis mit einem zulässigen natürlichen Nitratgehalt. Beide Komponenten liegen in getrockneter Form vor, der Mikroorganismus vorzugsweise in gefriergetrockneter Form.

Als Fleischerzeugnisse kommen alle fleischhaltigen Lebensmittel in Frage, auch solche, die nicht über den gesetzlich vorgeschriebenen Mindestfleischgehalt verfügen. Insbesondere sind dies Rohpökelware, Kochpökelware, Rohwürste und Kochwürste.

Es handelt sich bei den Mikroorganismen um solche, die in der Lebensmitteltechnologie eingeführt und üblich sind. Insbesondere sind dies nitratreduzierende Mikroorganismen der Gattungen Staphylococcus, Mikrococcus, Halomonas und Paracoccus. Insbesondere sind dies Keime, die über eine Nitrat-Reduktase verfügen und damit das erforderliche Nitrit aus dem Nitrat des Gemüseerzeugnisses bereitstellen können. Das Nitrit ist Ausgangspunkt für die Bildung des für die Umrötung notwendigen Stickoxids.

Es versteht sich, daß statt des lebenden Mikroorganismus auch isolierte Nitrat-Reduktase eingesetzt werden kann. Nitratreduzierende Enzymsysteme sind in der Wissenschaft bekannt und können für erfindungsgemäße Zwecke ebenfalls ohne weiteres eingesetzt werden.

Besonders bevorzugt sind Mikroorganismen der Spezies S. carnosus, S. xylosus und S. equorum sowie Kocuria varians, wie sie schon für die Umrötung von Fleischwaren eingesetzt werden. Eine besonders bevorzugte Kultur ist der handelsübliche Stamm Staphylococcus carnosus utilis. Weiterhin sind eine Reihe von nitratreduzierenden Halomonas-Spezies bekannt, die sich als lebensmitteltauglich erwiesen haben.

Als pflanzliche Produkte kommen im Grunde genommen beliebige Gemüseerzeugnisse in Frage, die über den erfindungsgemäß benötigten Nitratgehalt von 100 bis 5000 mg/kg, insbesondere 1.000 bis 2.500 mg/kg im Frischzustand verfügen. Hierzu gehören neben dem eigentlichen Gemüseerzeugnis selbst auch Gemüseextrakte und Säfte, gegebenenfalls in enzymatisch oder mikrobiell fermentierter Form, sowie diese Erzeugnisse in getrockneter Form.

Bevorzugte Gemüseerzeugnisse im Sinne der Erfindung sind verschiedene Formen von Salat, insbesondere Kopfsalat, Feldsalat, Eisbergsalat sowie Chinakohl, Spinat, Rote Bete oder Sellerie. Nach den derzeitigen Bestimmungen darf verzehrfähiger Kopfsalat im Sommer bis zu 2.500 mg/kg Nitrat enthalten, im Winter bis zu 3.500 mg/kg. Rote Bete darf bis zu 5000 mg/kg Nitrat enthalten. Es können Mischungen verschiedener Gemüseerzeugnisse eingesetzt werden. Kommt es auf geschmackliche Neutralität an, sind Formen von Salat bevorzugt. Es versteht sich, daß mit dem Zusatz der pflanzlichen Produkte weitere Effekte, beispielsweise im Bereich der Geschmacks- und Farbgebung, verbunden sein können.

Die erfindungsgemäße Umrötungsmischung kann zusätzlich zu den bislang genannten Bestandteilen auch weitere vorteilhafte Zusätze enthalten, beispielsweise die für die Herstellung der jeweiligen Fleischware benötigte Gewürzmischung sowie eine Reaktivierungsmischung für den Mikroorganismus. Es kann zweckmäßig sein, Mikroorganismus, Reaktivierungsmischung und/oder Gewürzmischung/Gemüseprodukt voneinander getrennt zu halten.

Die erfindungsgemäße Umrötungsmischung kann als verkehrsfähige Packung beispielsweise die einzelnen Komponenten in Mengen enthalten, wie sie für jeweils 25, 50, 100 und 200 kg Fleisch- bzw. Wurstzubereitung benötigt werden.

Die Erfindung betrifft weiterhin ein Verfahren zur Umrötung von Fleischwaren, insbesondere Brühwurst, bei dem man einer gewürzhaltigen, aber nitritfreien Fleisch- oder Wurstmasse lebensmitteltaugliche nitratreduzierende Mikroorganismen in einer Menge von 1 x 10⁸ bis 5 x 10¹⁰ Keimen/kg Masse zusammen mit einem pflanzlichen Produkt mit einem natürlichen Nitratgehalt von 100 bis 5000 mg/kg Frischprodukt des pflanzlichen Produktes in einer Menge von 10 bis 2000 g je kg Fleisch- oder Wurstmasse, bezogen auf das Frischgewicht des pflanzlichen Produkts, zusetzt, die Fleischerzeugnisse 6 bis 72 h reifen läßt und anschließend erhitzt. Die Mikroorganismen und das pflanzliche Produkt können in getrockneter Form vorliegen.

Mikroorganismen und Gemüseerzeugnis genügen dabei den vorstehend für die Umrötungsmischung angegebenen Kriterien. Das Gemüseerzeugnis wird der angesetzten Fleisch- oder Wurstmasse in einer solchen Menge zugesetzt, daß sich insbesondere ein Nitratgehalt von 10 bis 300 mg/kg Masse ergibt.

Es versteht sich, daß bei der Verwendung von nitrathaltigem Trinkwasser bei der Herstellung des Fleischerzeugnisses dieser Nitratgehalt ebenfalls berücksichtigt und für die erfindungsgemäßen Zwecke ausgenutzt werden kann. Der Nitratgehalt im Trinkwasser darf 50 ppm nicht überschreiten.

Wenn die Mikroorganismen als Trockenprodukt verwendet werden, ist es zweckmäßig, sie vor der Verwendung zu rehydratisieren oder zu reaktivieren. Die Rehydratisierung kann beispielsweise in Leitungswasser oder einem bekannten Rehydratisierungsmedium erfolgen. Zur Reaktivierung werden zweckmäßigerweise mit Mineralstoffen sowie Stickstoff- und Kohlenstoffquellen angereicherte flüssige Medien verwandt, in denen die Mikroorganismen über eine definierte Zeit, etwa 6 bis 72 h, insbesondere 1 2 bis 24 h belassen werden.

Die Verwendung von getrockneten, insbesondere gefriergetrockneten Mikroorganismen, nach Rehydratisierung oder Reaktivierung, ist für das erfindungsgemäße Verfahren bevorzugt, ebenso der Einsatz des pflanzlichen Produkts als Trockenprodukt.

Die Reifung des erfindungsgemäß erzeugten Fleischerzeugnisses erfolgt zweckmäßigerweise über einen Zeitraum von 10 bis 48 h bei einer Temperatur von 5 bis 12°C. Anschließend wird vorzugsweise bis auf eine Kerntemperatur von 68 bis 72°C erhitzt, insbesondere dann, wenn es sich um Brühwürste handelt.

Schließlich betrifft die Erfindung ein Fleischerzeugnis, erhältlich aus einer gewürzhaltigen, aber nitritfreien Fleisch- oder Wurstmasse unter Verwendung von 1 x 10⁸ bis 5 x 10¹⁰ Keimen/kg Fleisch- oder Wurstmasse lebensmitteltauglicher nitratreduzierender Mikroorganismen zusammen mit, gerechnet als Frischgewicht, 10 bis 2000 g/kg Fleisch- oder Wurstzubereitung eines pflanzlichen Produkts mit einem natürlichen Nitratgehalt von 100 bis 5000 mg/kg frisches pflanzliches Produkt. Dieses Fleischerzeugnis ist vorzugsweise eine Brühwurst. Die Mikroorganismen und das pflanzliche Produkt können in getrockneter Form-vorliegen.

Die Erfindung wird durch das nachstehende Beispiel näher erläutert.

### Beispiel:

Eine Brühwurstmasse wurde nach GEHA-Sortierung aus 20 kg R II, 22 kg S II, 20 kg S VI, 20 kg S VII sowie 18 kg Eis hergestellt. Je kg Gesamtmasse wurden 18,0 g Kochsalz, 4,0 g Mischgewürze, 0,5 g Natriumascorbat (als Umrötungshilfsmittel), 0,4 g Natriumdiphosphat und 50,0 g frische Gemüsemischung, bestehend aus Rote Bete, Spinat, Sellerie und Salaten, mit einem Nitratgehalt von 1.000 ppm verwandt.

Als Starterkultur wurde ein handelsüblicher gefriergetrockneter Staphylococcus carnosus utilis mit einer Einsaatdichte von 1,0 x 10⁷ Keimenig Brühwurstmasse verwandt.

Vor der Zubereitung der Brühwurstmasse wurde die Starterkultur 12 h in einer üblichen Rehydratisierungsmischung mit einer Stickstoffquelle, einer Kohlenstoffquelle und Mineralstoffen bei 25°C rehydratisiert.

Zur Herstellung der Brühwurstmasse wurde Magerfleisch und Fettgewebe getrennt voneinander durch eine 3 bis 4 mm-Scheibe gewolft. Das magere Material wurde dann unter Zugabe der vorbereiteten und zerkleinerten Gemüsemischung und der rehydratisierten Starterkultur im Kutter zerkleinert. Anschließend wurden Salz, Gewürze, Kutterhiffsmittel, Umrötungshilfen und ca. 30 % des Eises hinzugefügt und auf guten Verband weitergekuttert.

Der Masse wurde bei einer Temperatur von 4 bis 6°C das gewolfte Fettmaterial zugefügt und der Kutter bis auf 12 bis 14°C weiterlaufen gelassen. Anschließend wurde das restliche Eis zugegeben und im Schnellgang bis auf ca. 10°C gekuttert. Die Wurstmasse wurde anschließend im langsamen Gang auf 10 bis 12°C fertiggekuttert.

Anschließend wurde die Masse in Därme gefüllt und 18 h bei 5°C hängen gelassen. Danach wurden die Würste bei 76°C bis auf eine Kerntemperatur von 68 bis 72°C gebrüht. Nach dem Abkühlen im Wasser ergab sich ein Produkt, das in jeder Hinsicht, d.h. sowohl optisch als auch geschmacklich, einer handelsüblichen Brühwurst entsprach.

## Patentansprüche

1. Umrötungsmischung für Fleischerzeugnisse, insbesondere Brühwurst, enthaltend, 1 x 10⁸ bis 5 x 10¹⁰ Zellen eines getrockneten, lebensmitteltauglichen nitratreduzierenden Mikroorganismus und ein getrocknetes Gemüseerzeugnis entsprechend 10 bis 2000 g Frischgewicht, jeweils bezogen auf 1 kg Fleisch- oder Wurstmasse, wobei das Gemüseerzeugnis einen natürlichen Nitratgehalt von 100 bis 5000 mg pro kg rischgewicht Gemüseerzeugnis hat.

2. Umrötungsmischung nach Anspruch 1, **dadurch gekennzeichnet, daß** der nitratreduzierende Mikroorganismus der Gattung Staphylococcus, Mikrococcus, Halomonas oder Paracoccus anghört.

3. Umrötungsmischung nach Anspruch 2, **dadurch gekennzeichnet, daß** der nitratreduzierende Mikroorganismus ein handelsüblicher Stamm der Spezies S. carnosus, S. xylosus, S. equorum oder Kocuria varians ist.

4. Umrötungsmischung nach Anspruch 3; **dadurch gekennzeichnet, daß** der Mikroorganismus der Stamm S. camosus utilis ist.

5. Umrötungsmischung nach einem der Ansprüche 1 bis 4, **gekennzeichnet durch** einen Nitratgehalt von 1.000 bis 2.500 mg pro kg Frischgewicht des Gemüseerzeugnisses.

6. Umrötungsmischung nach einem der vorstehenden Ansprüche, **dadurch gekennzeichnet, daß** das Gemüseerzeugnis Feldsalat, Kopfsalat, Chinakohl, Eisbergsalat, Spinat, Rote Bete oder Sellerie ist.

7. Umrötungsmischung nach einem der vorstehenden Ansprüche, **dadurch gekennzeichnet, daß** sie zusätzlich würzende Zutaten sowie Kutter- und Umrötehilfsmittel enthält.

8. Umrötungsmischung nach einem der vorstehenden Ansprüche, **dadurch gekennzeichnet, daß** sie zusätzlich eine Reaktivierungsmischung für den verwendeten Mikroorganismus enthält.

9. Umrötungsmischung nach Anspruch 7, **dadurch gekennzeichnet, daß** die Reaktivierungsmischung getrennt von den übrigen Bestandteilen vorliegt.

10. Verfahren zur Umrötung von Fleischwaren, insbesondere Brühwurst, **dadurch gekennzeichnet, daß** man einer gewürzhaltigen, aber nitritfreien Fleisch- oder Wurstmasse pro kg Fleisch- oder Wurstmasse 1 x 10⁸ bis 5 x 10¹⁰ Keime eines lebensmitteltauglichen nitratreduzierenden Mikroorganismus zusammen mit einem pflanzlichen Produkt, insbesondere ein Gemüseerzeugnis, entsprechend 10 bis 2000 g Frischgewicht des pflanzlichen Produktes pro kg Fleisch- oder Wurstmasse zusetzt, wobei der natürliche Nitratgehalt 100 bis 5000 mg pro kg Frischgewicht des pflanzlichen Produktes beträgt, die Fleischware 6 bis 72 h reifen läßt und gegebenenfalls anschließend erhitzt.

11. Verfahren nach Anspruch 10, **dadurch gekennzeichnet, daß** das pflanzliche Produkt als Trockenprodukt zugesetzt wird.

12. Verfahren nach Anspruch 10 oder 11, **dadurch gekennzeichnet, daß** das pflanzliche Produkt einen Nitratgehalt von 1.000 bis 3.500 mg/kg, bezogen auf das Frischgewicht, aufweist.

13. Verfahren nach einem der Ansprüche 10 bis 12, **dadurch gekennzeichnet, daß** das Gemüseerzeugnis in einer Menge zugesetzt wird, daß sich ein Nitratgehalt von 10 bis 300 mg/kg Fleisch- oder Wurstmasse ergibt.

14. Verfahren nach einem der Ansprüche 10 bis 13, **dadurch gekennzeichnet, daß** als pflanzliches Produkt Feldsalat, Kopfsalat, Chinakohl, Eisbergsalat, Spinat, Rote Bete oder Sellerie verwandt wird.

15. Verfahren nach einem der Ansprüche 10 bis 14, **dadurch gekennzeichnet, daß** der Fleisch- oder Wurstmasse Mikroorganismen der Gattung Staphylococcus, Mikrococcus, Halomonas oder Paracoccus zugesetzt werden.

16. Verfahren nach Anspruch 15, **dadurch gekennzeichnet, daß** als Mikroorganismen Stämme der Spezies S. carnosus, S. xylosus, S. equorum oder Kocuria varians, insbesondere S. camosus utilis, verwandt werden.

17. Verfahren nach einem der Ansprüche 10 bis 16, **dadurch gekennzeichnet, daß** die Mikroorganismen vor der Zugabe zur Fleisch- oder Wurstmasse rehydratisiert und/oder reaktiviert werden.

18. Verfahren nach einem der Ansprüche 10 bis 17, **dadurch gekennzeichnet, daß** die Reifung über 10 bis 48 h bei 2 bis 20°C vorgenommen wird.

19. Verfahren nach einem der Ansprüche 10 bis 18, **dadurch gekennzeichnet, daß** die gereifte Fleisch- oder Wurstzubereitung bis auf eine Kerntemperatur von >62 C erhitzt wird.

20. Fleischerzeugnis, erhältlich aus einer gewürzhaltigen, aber nitritfreien Fleisch- oder Wurstzubereitung unter Verwendung von 1 x 10⁸ bis 5 x 10¹⁰ Keimen eines getrockneten, lebensmitteltauglichen nitratreduzierenden Mikroorganismus pro kg Fleisch- oder Wurstzubereitung zusammen mit, einem pflanzlichen Produkt, insbesondere eines Gemüseerzeugnisses, entsprechend 10 bis 2000 g Frischgewicht des pflanzlichen Produktes pro kg Fleisch- oder Wurstmasse, wobei das pflanzliche Produkt einem natürlichen Nitratgehalt von 100 bis 5000 mg pro kg Frischgewicht hat.

21. Brühwurst nach Anspruch 20.

## Claims

1. Reddening mixture for meat products, in particular boiling sausage, comprising 1 x 10⁸ to 5 x 10¹⁰ cells of a dried, nitrate-reducing microorganism, usable for food stuff, and a dried vegetable product having a natural nitrate content of 100 to 5000 mg/kg based on the weight of the fresh vegetable product, in a quantity of 10 to 2000 g/kg of fresh vegetable product per 1 kg meat- or sausage preparation.

2. The reddening mixture of claim 1, wherein the nitrate reducing micororganism is selected from genus staphylococcus, micrococcus, halomonas or parapcoccus.

3. The reddening mixture according to claim 2, wherein the nitrate reducing microorganism is a strain, which is already used for reddening of meat products, is selected from the group consisting of species S. carnosos, S. xylosos, S. equorum or Kocuria varians.

4. The reddening mixture according to claim 3, wherein said microorganism is strain S. carnosos utilis.

5. The reddening mixture according to onw of claims 1 to 4, wherein said natural nitrate content of the vegetable product is 1000 to 2500 mg/kg based on the weight of the fresh vegetable product

6. The reddening mixture according to one of the previous claims, wherein the vegetable product is selected from the group consisting of lamb's lettuce, head lettuce, Chinese cabbage, iceberg lettuce, spinach, beetroot, and celery.

7. The reddening mixture according to one of the previous claims, wherein the reddening mixture contain additional seasoning additives and chopping adjuvants and reddening additives.

8. The reddening mixture according to one of the previous claims, wherein it contains in addition a reactivating mixture for the microorganism.

9. The reddening mixture according to claim 7, wherein the reactivating mixture is seperated from the other components.

10. Process to reddening meat products, in particular boiling sausage, comprising the steps of adding to a seasoned but nitrate-free meat or sausage preparation, a nitrate-reducing microorganism, that can be savely used in food stuff, in a quantity of 1 x 10⁸ to 5 x 10¹⁰ cells per kilogram meat- or sausage preparation in combination with a plant product, in particular a vegetable product, having a natural nitrate content of 100 to 5000 mg/kg based on its fresh weight in a quantity of 10 to 2000 g/kg based on its fresh weight per 1 kg of meat- or sausage preparation wherein the meet product is ripened or rests for 6 to 72 hours.

11. Process according to claim 10, wherein the plant product is used as dry product.

12. Process according to one of the claims 10 or 11, wherein said natural nitrate content of the plant product is 1000 to 3500 mg/kg based on its fresh weight.

13. Process according to claim 10 to 12, wherein the vegetable product is added in a quantity, that results in a nitrate content of 10 to 300 mg/kg of meat or sausage preparation.

14. Process, according to one of the claims 10 to 13, wherein the plant product is selected from the group consisting of lamb's lettuce, head lettuce, Chinese cabbage, iceberg lettuce, spinach, beetroot and celery.

15. A process, according to one of the claims 10 to 14, wherein a microorganism of the genus staphylococcus, micrococcus, halomonas or paracoccus is added to the meet- or sausage preparation.

16. A process according to claim 14, wherein strain selected from the group consisting of the species S. carnosus, S. xylosus, S. equorom or Kocuria varians, in particular S. camosus utilis, is used as said microorganism.

17. A process according to one of the claims 10 to 16, wherein said microorganism are initially in a dried state and a rehydrated or reactivated before being added to the meat- or sausage preparation.

18. A process according to one of the claims 10 to 17, wherein the ripening is performed for 10 to 48 hours at 2 to 20 °C.

19. A process according to one of the claims 10 to 18, wherein the ripned meet or sausage preparation is heated to a core temperature of > 62 °C.

20. Meat product, obtainable from a seasoned but nitrate-free meat or sausage preparation, wherein 1 x 10⁸ to 5 x 10¹⁰ cells a nitrate reducing microorganism, that can be savely used in foodstuff, per kilogram meat or sausage preparation in combination with a plant is used product in particular a vegetable product, having a natural nitrate content of 100 to 5000 mg/kg based on its fresh weight in a quantity of 10 to 2000 g/kg of plant product, based on its fresh weight.

21. Boiling sausage according to claim 20.

## Revendications

1. Mélange destiné à rougir des produits carnés, notamment des saucisses contenant 1 x 10⁸ à 5 x 10¹⁰ de cellules de micro-organisme réduisant les nitrates compatibles avec des denrées alimentaires et un produit de type légume sec représentant de 10 à 2 000 g de poids frais rapportés à chaque fois à 1 kg de masse de viande ou de saucisse, le produit de type légume présentant une teneur en nitrate naturel s'élevant de 100 à 5 000 mg par kg de poids frais.

2. Mélange destiné à rougir selon la revendication 1, **caractérisé en ce que** le micro-organisme réduisant les nitrates appartient au genre Staphylococcus, Micrococcus, Halomonas ou Paracoccus.

3. Mélange destiné à rougir selon la revendication 2, **caractérisé en ce que** le micro-organisme réduisant les nitrates est une souche disponible dans le commerce de l'espace S. carnosus, S. xylosus, S. equorum ou Kocuria varians.

4. Mélange destiné à rougir selon la revendication 3, **caractérisé en ce que** le micro-organisme est la souche S. carnosus utilis.

5. Mélange destiné à rougir selon l'une quelconque des revendications 1 à 4, **caractérisé par** une teneur en nitrate de 1 000 à 2 500 mg par kg de poids frais de produit de type légume.

6. Mélange destiné à rougir selon l'une quelconque des revendications précédentes, **caractérisé en ce que** le produit de type légume est une mâche, une laitue pommée, un chou chinois, une salade de laitue Iceberg, des épinards, une betterave rouge ou un céleri.

7. Mélange destiné à rougir selon l'une quelconque des revendications précédentes, **caractérisé en ce qu'**il contient en plus des ingrédients pour l'assaisonnement ainsi que des adjuvants de cuttérage et des colorants.

8. Mélange destiné à rougir selon l'une quelconque des revendications précédentes, **caractérisé en ce qu'**il contient en plus un mélange de réactivation pour le micro-organisme utilisé.

9. Mélange destiné à rougir selon la revendication 7, **caractérisé en ce que** le mélange de réactivation est séparé des composants traditionnels.

10. Procédé destiné à rougir des produits carnés, notamment des saucisses, **caractérisé en ce que** l'on ajoute à une masse de saucisse ou de viande contenant des aromates mais exempte de nitrite par kg de masse de viande ou de saucisse 1 x 10⁸ à 5 x 10¹⁰ de germes d'un micro-organisme réduisant les nitrates compatibles avec les denrées alimentaires conjointement avec un produit végétal notamment un produit de type légume, représentant de 100 à 2 000 g de poids frais du produit végétal par kg de masse de viande ou de saucisse, la teneur en nitrate naturel s'élevant de 10 à 5 000 mg par kg de poids frais du produit végétal, le produit carné étant porté à maturation 6 à 72 heures et chauffée ensuite le cas échéant.

11. Procédé selon la revendication 10, **caractérisé en ce que** le produit végétal est ajouté sous la forme d'un produit sec.

12. Procédé selon la revendication 10 ou 11, **caractérisé en ce que** le produit végétal présente une teneur en nitrate s'élevant de 1 000 à 3 500 mg/kg rapportés au poids frais.

13. Procédé selon l'une quelconque des revendications 10 à 12, **caractérisé en ce que** le produit de type légume est ajouté en une quantité permettant une teneur en nitrate s'élevant de 10 à 300 mg/kg de masse de viande ou de saucisse.

14. Procédé selon l'une quelconque des revendications 10 à 13, **caractérisé en ce que** comme produit végétal, on utilise une mâche, une laitue pommée, un chou chinois, une salade de laitue Iceberg, des épinards, une betterave rouge ou un céleri.

15. Procédé selon l'une quelconque des revendications 10 à 14, **caractérisé en ce que** des micro-organismes du genre Staphylococcus, Micrococcus, Halomonas ou Paracoccus sont ajoutés à la masse de viande ou de saucisse.

16. Procédé selon la revendication 15, **caractérisé en ce que** des souches des espèces S. carnosus, S. xylosus, S. equorum ou Kocuria varians, et notamment S. carnosus utilis sont utilisées en tant que micro-organismes.

17. Procédé selon l'une quelconque des revendications 10 à 16, **caractérisé en ce que** les micro-organismes sont réhydratés et/ou réactivés avant leur ajout à la masse de viande ou de saucisse.

18. Procédé selon l'une quelconque des revendications 10 à 17, **caractérisé en ce que** la maturation de 10 à 48 heures de 2 à 20°C est prévue.

19. Procédé selon l'une quelconque des revendications 10 à 18, **caractérisé en ce que** la préparation de saucisse ou de viande portée à maturation est chauffée à une température à coeur de > 62°C maximum.

20. Produit carné obtenu à partir d'une préparation de viande ou de saucisse contenant des aromates, mais exempte de nitrite, en utilisant de 1 x 10⁸ à 5 x 10¹⁰ de germes d'un micro-organisme réduisant les nitrates, compatible avec les denrées alimentaires, sec par kg de préparation de viande ou de saucisse, conjointement avec un produit végétal, notamment un produit de type légume représentant de 10 à 2 000 g de poids frais de produit végétal par kg de masse de viande ou de saucisse, le produit végétal présentant une teneur en nitrate naturel s'élevant de 100 à 5 000 mg par kg de poids de viande.

21. Saucisse selon la revendication 20.
